# EUROPÄISCHE PATENTANMELDUNG

(11) **EP 4 631 774 A1**
(43) Veröffentlichungstag der Anmeldung: **15.10.2025**
(21) Anmeldenummer: 24168891.0
(22) Anmeldetag: 08.04.2024
(51) Int. Cl.: B60L 50/64, B60L 50/60, B60K 1/04, H01M 10/613, H01M 10/625, H01M 10/6554, H01M 50/224, H01M 50/244, H01M 50/276, H01M 50/249, B60K 1/00

(54) **KRAFTFAHRZEUG MIT EINER HOCHVOLTBATTERIE**

(71) Anmelder: MAGNA STEYR Fahrzeugtechnik GmbH & Co KG, 8041 Graz (AT)
(72) Erfinder: ERLACHER, Manuel, 9545 Radenthein (AT); SCHWARZL, Werner, 8301 Laßnitzhöhe (AT); LIENHART, Christian, 8054 Seiersberg (AT); RASTL, Philipp, 8510 Stainz (AT); STADLER, Severin, 5350 Strobl (AT); NEUHOLD, Daniel, 8046 Stattegg (AT)
(74) Vertreter: Zangger, Bernd

(57) **Zusammenfassung**

Ein Kraftfahrzeug mit einer Hochvoltbatterie, wobei die Hochvoltbatterie ein Batteriegehäuse umfasst, wobei das Batteriegehäuse zumindest Seitenwände (1.1) und einen die Seitenwände (1.1) oben bedeckenden Deckel (1.2) umfasst, wobei eine Vielzahl von Batteriezellen (2) im Batteriegehäuse angeordnet sind, wobei die Seitenwände (1.1) und der Deckel (1.2) einteilig durch eine unten offene Wanne (1) ausgebildet sind, wobei eine Trägerplatte (4) den, die Wanne (1) an deren Unterseite bedeckenden Boden der Hochvoltbatterie bildet, wobei die Batteriezellen (2) auf der Trägerplatte (4) montiert sind, wobei die Wanne (1) aus zumindest zwei Blechen (1.3, 1.4) verschiedener Materialdicke und/oder Materialgüte gefügt ist, sowie ein Verfahren zur Herstellung eines solchen Kraftfahrzeugs.

## Beschreibung

### Gebiet der Erfindung

Die vorliegende Erfindung betrifft ein Kraftfahrzeug mit einer Hochvoltbatterie und ein Verfahren zur Herstellung eines solchen Kraftfahrzeugs.

### Stand der Technik

Es ist bekannt, dass Hochvoltbatterien in Kraftfahrzeuge verbaut werden können, insbesondere als Antriebsbatterie zur Bereitstellung einer elektrischen Energie für den Antrieb des Kraftfahrzeugs. Die Batterie besitzt dann ein Batteriegehäuse, das die Zellmodule beherbergt. Batteriegehäusen sind üblicherweise aus verschiedenen Einzelteilen zusammengesetzt, Das Batteriegehäuse wird in einem Unterboden mittels Schrauben verbaut und ist demontierbar. Die Dichtheit der Fahrzeugkarosserie wird über entsprechende Bauteile in der Bodengruppe sichergestellt und ist unabhängig vom Batteriegehäuse. Dabei ist, außer an den Schraubstellen, üblicherweise ein Spalt zwischen der Batterie und der Fahrzeugstruktur von mindestens einigen Millimetern vorhanden, damit ein Scheuern im Betrieb (Geräusche, Korrosion...) vermieden wird, aber auch um eine kollisionsfreie Montage zu ermöglichen. Zur Wartung oder Reparatur muss die komplette Batterieeinheit vom Fahrzeug demontiert werden.

### Zusammenfassung der Erfindung

Es ist eine Aufgabe der Erfindung, ein Kraftfahrzeug mit einer Hochvoltbatterie anzugeben, wobei die Hochvoltbatterie einen geringen Bauraumbedarf hat, sodass der Energieinhalt im Hochvoltspeicher vergrößert sein kann und damit die Reichweite des Fahrzeuges erhöht wird, wobei auch Gewicht und Herstellungskosten niedrig sind. Eine weitere Aufgabe ist es, ein einfaches und kostengünstiges Verfahren zur Herstellung eines solchen Kraftfahrzeugs anzugeben.

Die Lösung der Aufgabe erfolgt durch ein Kraftfahrzeug mit einer Hochvoltbatterie, wobei die Hochvoltbatterie ein Batteriegehäuse umfasst, wobei das Batteriegehäuse zumindest Seitenwände und einen die Seitenwände oben bedeckenden Deckel umfasst, wobei eine Vielzahl von Batteriezellen im Batteriegehäuse angeordnet sind, wobei die Seitenwände und der Deckel durch eine unten offene Wanne ausgebildet sind, wobei eine Trägerplatte den, die Wanne an deren Unterseite bedeckenden Boden der Hochvoltbatterie bildet, wobei die Batteriezellen auf der Trägerplatte montiert sind, wobei die Wanne aus zumindest zwei Blechen verschiedener Materialdicke und/oder Materialgüte gefügt ist.

Erfindungsgemäß weist ein Hochvoltspeicher ein Batteriegehäuse auf, dass im Gegensatz zu den herkömmlichen Bauweisen keine getrennten seitlichen Gehäuse- bzw. Rahmenbauteile und keinen getrennten Deckel verwendet, sondern eine Wanne, die die Seitenwände und den in Einbaulage im Kraftfahrzeug oben liegenden Deckel des Batteriegehäuses ausbildet. Diese verkehrte Wanne kann einfach und kostengünstig mit weiteren Batteriebauteilen, wie insbesondere Batteriezellen bestückt werden und in die Fahrzeugkarosserie strukturintegriert eingebaut werden. Diese Wanne kann gleichzeitig die Bodengruppe von unten abschließen. Die Wanne kann direkt auf das Bodenblech des Kraftfahrzeugs abschließen und/oder beispielsweise bereichsweise das Bodenblech ausbilden. Ein wesentlicher Vorteil dieser Lösung ist der Bauraumzugewinn in Z-Richtung, da der Luftspalt, der üblicherweise zwischen Batteriedeckel und Bodenblech eingehalten werden muss, hier entfallen kann. Ein Verzicht auf getrennte Bauteile, wie einen getrennten Batteriedeckel oder getrennte Seitenteile bzw. Rahmenbauteile, kann auch einen Kosten- und Gewichtsvorteil darstellen. Die Wanne ist aus zumindest zwei Blechen verschiedener Materialdicke und/oder Materialgüte gefügt. Die beiden Bleche können somit optimiert ausgeführt werden, indem unterschiedliche Materialdicken und Güten eingesetzt werden. Hierdurch kann ein besonders geringes Gewicht des Batteriegehäuses erzielt werden. Weiters können die Materialien für Crash- und Steifigkeitsanforderungen der Karosserie optimal abgestimmt werden.

Die Batteriezellen können auf einfache und kostengünstige Art auf eine Trägerplatte montiert werden, die den Boden des Batteriegehäuses bildet. Nach der Bestückung der Trägerplatte mit den Batteriezellen, und bevorzugt nach der elektrischen Verbindung der Batteriezellen, kann die fertig bestückten Trägerplatte mit der Wanne gefügt werden, insbesondere verschraubt werden, um das Batteriegehäuse zu schließen. Die fertige Hochvoltbatterie kann dann in eine Fahrzeugkarosserie eingebaut werden, bevorzugt unter Verwendung von mechanischen Fügeelementen, wie Schrauben oder Nieten, zusätzlich zu einem Montageklebstoff, sodass eine kontinuierliche Fertigung der Fahrzeuge möglich ist, ohne dass das Fahrzeug zum Aushärten des Klebstoffes ausgeschleust werden muss.

Weiterbildungen der Erfindung sind in den abhängigen Ansprüchen, der Beschreibung sowie den beigefügten Zeichnungen angegeben.

Bevorzugt bildet ein erstes Blech mit einer ersten Materialdicke und/oder Materialgüte im Wesentlichen die Seitenwände der Wanne aus und ein zweites Blech mit einer zweiten Materialdicke und/oder Materialgüte bildet im Wesentlichen den Deckel aus.

Gemäß einer Ausführungsform bildet die Wanne eine zweiteilige Bauteilgruppe, wobei das erste Blech und das zweite Blech in einem Flanschbereich miteinander verschweißt sind und bevorzugt im Flanschbereich abgedichtet sind.

Gemäß einer anderen Ausführungsform ist die Wanne einteilig durch Platinenschweißen hergestellt, wobei das erste Blech und das zweite Blech bereits als Platine miteinander verschweißt sind und anschließend umgeformt sind.

Bevorzugt sind die Batteriezellen stehend auf der Trägerplatte montiert, so dass die elektrischen Kontakte der Batteriezellen nach oben gerichtet sind und die Zellenböden nach unten gerichtet sind.

Bevorzugt sind die Batteriezellen auf einem Zellenträger montiert, besonders bevorzugt stehend montiert, wobei der Zellenträger einstückig von der Trägerplatte ausgebildet ist oder mit der Trägerplatte gefügt ist. Die Batteriezellen werden somit mittelbar über den Zellenträger auf der Trägerplatte montiert.

Besonders bevorzugt sind zumindest eine oder mehrere flächige Kühlplatten auf dem Zellenträger angeordnet, unterhalb der Batteriezellen.

Die Trägerplatte bildet bevorzugt ein Unterfahrschutzblech des Kraftfahrzeugs aus. Die Zugänglichkeit zu den Batteriezellen kann von unten gewährleistet sein, über die bevorzugt demontierbares Trägerplatte, die gleichzeitig als Unterfahrschutz dient.

Bevorzugt bildet der Deckel der Wanne ein Bodenblech des Kraftfahrzeugs und/oder ist der Deckel der Wanne von unten an einem Bodenblech befestigt, insbesondere verschraubt und/oder geklebt. Der Deckel der Wanne kann beispielsweise bereichsweise das Bodenblech ausbilden und beispielsweise in anderen Bereichen, insbesondere an Rändern, mit einem Bodenblech gefügt sein.

Der Deckel der Wanne kann Befestigungspunkte für Sitzquerträger aufweisen. Sitzquerträger sind bevorzugt an der Wanne befestigt, insbesondere mit dem Deckel der Wanne verklebt und/oder verschraubt.

Vorzugsweise ist die Wanne an einer übrigen Tragstruktur des Kraftfahrzeugs, bevorzugt an seitlichen Schwellern des Kraftfahrzeugs, von unten montiert, bevorzugt geklebt und geschraubt. Der Schweller kann beispielsweise in Schalenbauweise hergestellt sein. Die Wanne kann dann mit einer oder mehreren Schalen des Schwellers gefügt sein, jeweils bevorzugt geklebt und/oder geschraubt.

Die Wanne, insbesondere Seitenwände der Wanne, können einen Teil der Tragstruktur des Kraftfahrzeugs, bevorzugt der seitlichen Schweller des Kraftfahrzeugs, ausbilden. Beispielsweise kann eine Schale des Schwellers durch eine Seitenwand der Wanne gebildet werden.

Vorzugsweise sind eine Vielzahl von Querträgern der Tragstruktur des Kraftfahrzeugs innerhalb der Wanne der Hochvoltbatterie angeordnet.

Die Querträger können mit dem Zellenträger verschweißt oder einstückig ausgebildet sein.

Bevorzugt sind die Batteriezellen jeweils in den Zwischenräumen zwischen den Querträgern stehend an den Querträgern montiert, so dass mehrere parallele Reihen von Batteriezellen zwischen den Querträgern verlaufen. Die Batteriezellen können einzeln in die Wanne montiert sein oder in Batteriezellenmodule zusammengefasst in die Wanne montiert sein. Die Hochvoltbatterie kann somit stehend montierte Batteriemodule aufweisen.

Ein erfindungsgemäßes Verfahren zur Herstellung eines Kraftfahrzeugs, wie zuvor beschrieben, kann vorsehen, dass die Wanne dadurch gebildet wird, dass das erste Blech und das zweite Blech geformt werden und danach in einem Flanschbereich miteinander verschweißt werden oder dass das erste Blech und das zweite Blech bereits als Platine miteinander verschweißt werden und anschließend umgeformt werden, um die Wanne zu bilden.

Ein erfindungsgemäßes Verfahren zur Herstellung eines Kraftfahrzeugs, wie zuvor beschrieben, kann vorsehen, dass in einem Vormontageprozess die Batteriezellen auf die Trägerplatte aufgesetzt werden, insbesondere in den Zellenträger eingesetzt werden, dann die Trägerplatte mit der Wanne gefügt wird, zur Herstellung der Hochvoltbatterie, und danach die vormontierte Hochvoltbatterie von unten in einer übrigen Tragstruktur des Kraftfahrzeugs montiert wird, bevorzugt an seitlichen Schwellern des Kraftfahrzeugs befestigt.

Zumindest ein flächiges Kühlelement, also eine Kühlplatte, kann vor dem Montieren der Batteriezellen auf der Trägerplatte angeordnet werden, zum Beispiel eingelegt werden. Danach werden die Batteriezellen auf die Trägerplatte, insbesondere in den Zellenträger, eingesetzt. Danach können die Batteriezellen verschaltet werden.

Dann kann die Trägerplatte und Wanne miteinander verschraubt werden. Der Zellenträger kann als einteiliges Gußteil ausgeführt werden, oder auch als mehrteilige Schweißbaugruppe oder auch als Materialkombination - zum Beispiel die Trägerplatte aus faserverstärktem Material wie GFK und der Zellenträger aus Metall, insbesondere aus Aluminium.

Nach dem Verschrauben der Trägerplatte mit der Wanne, um das Gehäuse zu bilden, kann eine Kontaktierung der Zellen zu Steckerverbindungen an einer Stirnseite des Gehäuses durch eine Ausnehmung erfolgen. Danach kann eine Schließplatte, die auch die Steckverbindungen beinhaltet, gasdicht an das Gehäuse verschraubt werden.

Die Vormontage des Batteriegehäuses kann im ausgebauten Zustand, außerhalb des herzustellenden Kraftfahrzeugs, erfolgen.

Die vormontierte Batterie kann an ein Montageband gebracht werden und von unten mittels üblicher Manipulationsvorrichtungen in das Fahrzeug eingebaut werden.

Die vormontierte Hochvoltbatterie kann von unten in einer übrigen Tragstruktur des Kraftfahrzeugs montiert werden, bevorzugt an seitlichen Schwellern des Kraftfahrzeugs befestigt werden, zum Beispiel verschraubt werden.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines Teilbereichs eines erfindungsgemäßen Kraftfahrzeugs in Querrichtung des Fahrzeugs (X-Schnitt).
- Fig. 2a: ist eine Schnittansicht eines Teilbereichs einer Wanne eines erfindungsgemäßen Kraftfahrzeugs in einer ersten erfindungsgemäßen Ausführungsform.
- Fig. 2b: ist eine Schnittansicht eines Teilbereichs einer Wanne eines erfindungsgemäßen Kraftfahrzeugs in einer zweiten erfindungsgemäßen Ausführungsform.
- Fig. 3: ist eine Schnittansicht eines Teilbereichs eines erfindungsgemäßen Kraftfahrzeugs in Längsrichtung des Fahrzeugs (Y-Schnitt).
- Fig. 4: ist eine Schnittansicht eines Teilbereichs eines weiteren erfindungsgemäßen Kraftfahrzeugs in Längsrichtung des Fahrzeugs (Y-Schnitt), in einer alternativen Ausführung.

### Detaillierte Beschreibung der Erfindung

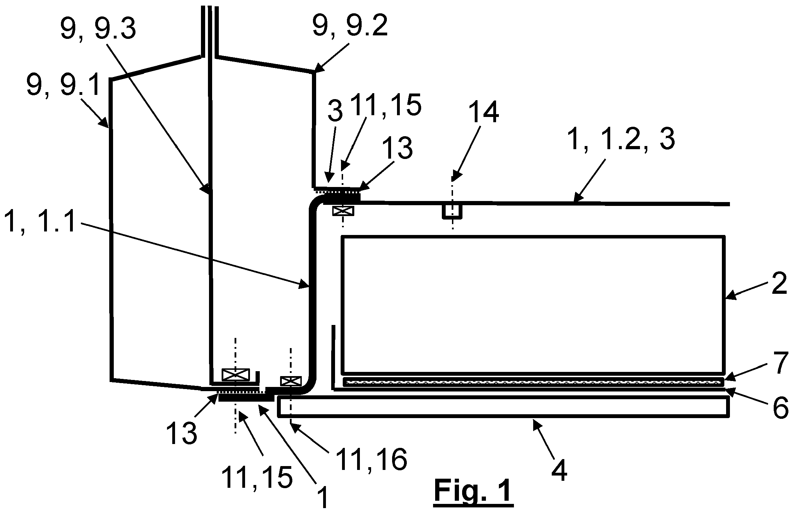

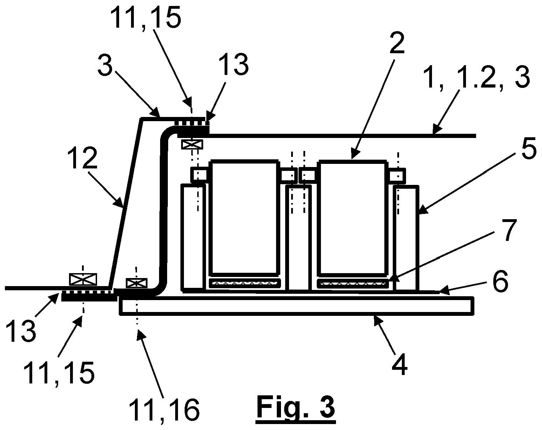

Fig. 1 ist eine schematische Darstellung einer Hochvoltbatterie in einer Wanne 1 eines erfindungsgemäßen Kraftfahrzeugs, in Querrichtung. Das Fahrzeug ist also von vorne gesehen. In Fig. 3 ist das selbe Fahrzeug in einem Schnitt normal zum Schnitt der Fig. 1 dargestellt, also in Längsrichtung des Fahrzeugs, von der Seite her gesehen.

Das ausschnittsweise dargestellte Kraftfahrzeug umfasst eine Hochvoltbatterie, die ein Batteriegehäuse umfasst, wobei das Batteriegehäuse Seitenwände 1.1 und einen die Seitenwände 1.1 oben bedeckenden Deckel 1.2 umfasst. Die Seitenwände 1.1 und der Deckel 1.2 sind durch eine unten offene Wanne 1 ausgebildet.

Eine Vielzahl von Batteriezellen 2 sind im Batteriegehäuse, also in der Wanne 1, angeordnet. Die Batteriezellen 2 sind stehend innerhalb der Wanne 1 auf einer Trägerplatte 4 montiert, so dass die elektrischen Kontakte der Batteriezellen 2 nach oben gerichtet sind und die Zellenböden nach unten gerichtet sind.

Die Batteriezellen 2 sind auf einem Zellenträger 6 montiert, der mit der Trägerplatte 4 gefügt oder einstückig ausgebildet ist.

Flächige Kühlplatten 7 sind auf dem Zellenträger 6 angeordnet, unterhalb der Batteriezellen 2.

Der Deckel 1.2 der Wanne 1 bildet ein Bodenblech 3 des Kraftfahrzeugs und ist an den seitlichen Rändern von unten an einem weiteren, randseitigen Bodenblech 3 befestigt, nämlich über Verschraubungen 11 verschraubt und zusätzlich geklebt, mittels Klebstoff 13 zwischen dem randseitigen Bodenblech 3 und dem Deckel 1.2 der Wanne 1. Das randseitige Bodenblech 3 kann vom Schweller 9 ausgebildet sein, insbesondere von einer Schale des Schwellers innen oben 9.2.

Der Deckel 1.2 der Wanne 1 weist optional Befestigungspunkte 14 für Sitzquerträger auf. Sitzquerträger können direkt an der Wanne 1 befestigt werden, insbesondere mit dem Deckel 1.2 verschraubt werden.

Die Wanne 1 ist an einem seitlichen Schweller 9 des Kraftfahrzeugs befestigt, nämlich von unten montiert. Die Befestigung der Wanne 1 am Schweller 9 erfolgt mittels Klebstoff 13 und Schraubverbindung 11. Die Befestigung am Schweller 9 kann an einem seitlichen Rand der Wanne 1 erfolgen, der einen zur Fahrbahn und zum Deckel 1.2 parallelen Flansch ausbildet. Die Wanne 1 ist in Fig. 1 an einer Schale 9.1 des Schwellers 9 die die Außenseite des Schwellers 9 ausbildet befestigt. Eine zusätzliche Befestigung der Wanne 1 erfolgt, wie zuvor beschrieben, mit einer Schale 9.2 des Schwellers 9, die innen liegen kann und einen oberen Teil des Schwellers 9 ausbilden kann. Ein unterer Teil der Innenseite des Schwellers 9 kann durch die Seitenwände 1.1 der Wanne 1 ausgebildet sein. Der Schweller 9 kann zudem eine mittige Versteifung oder Schale 9.3 aufweisen. Die mittige Schale 9.3 kann ebenfalls an der Wanne 1 befestigt sein.

Die Wanne 1, insbesondere Seitenwände 1.1 der Wanne 1, bilden somit einen Teil der Tragstruktur des Kraftfahrzeugs, nämlich der seitlichen Schweller 9 des Kraftfahrzeugs, aus.

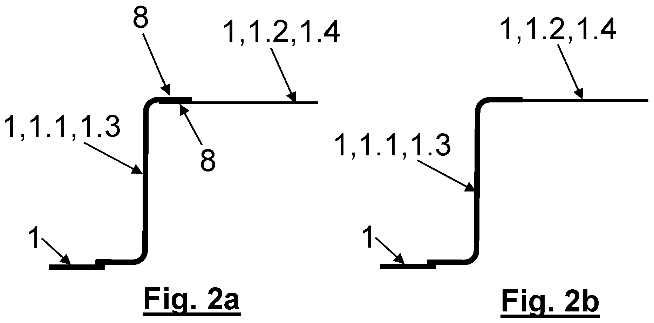

Die Wanne 1 ist aus zumindest zwei Blechen 1.3, 1.4 verschiedener Materialdicke und/oder Materialgüte gefügt, wie in Fig. 2a und Fig. 2b dargestellt. Dadurch kann eine Gewichtsersparnis durch optimale Baudickenverteilung erreicht werden.

Ein erstes Blech 1.3 mit einer ersten Materialdicke bildet im Wesentlichen die Seitenwände 1.1 der Wanne 1 aus. Ein zweites Blech 1.4 mit einer zweiten Materialdicke bildet im Wesentlichen den Deckel 1.2 und somit bevorzugt auch das Bodenblech 3 aus.

In der Variante der Fig. 2a bildet die Wanne 1 eine zweiteilige Bauteilgruppe, nämlich eine Schweißgruppe. Das erste Blech 1.3 weist eine Materialdicke von 2 mm auf, das zweite Blech 1.4 eine Materialdicke von 1 mm. Das erste Blech 1.3 und das zweite Blech 1.4 sind in einem Flanschbereich 8 miteinander verschweißt und abgedichtet. Der Flanschbereich 8 ist horizontal angeordnet.

In der Variante der Fig. 2b ist die Wanne 1 einteilig durch Platinenschwei-ßen hergestellt. Zwei Bleche mit unterschiedlicher Dicke werden hier bereits als Platine verschweißt und anschließend umgeformt. Das Material ist also platinengeschweißt mit einer Dicke von 2 mm im Bereich der Seitenwand 1.1 der Wanne 1 und mit einer Dicke von 1 mm im Bereich des Deckels 1.2 der Wanne 1.

Wie in Fig. 3 gut ersichtlich, ist eine Vielzahl von Querträgern 5 der Tragstruktur des Kraftfahrzeugs innerhalb der Wanne 1 der Hochvoltbatterie angeordnet, wobei die Querträger 5 einstückig mit dem Zellenträger 6 ausgebildet sein können.

Die Batteriezellen 2 sind jeweils in den Zwischenräumen zwischen den Querträgern 5 an den Querträgern 5 montiert, so dass mehrere parallele Reihen von Batteriezellen 2 zwischen den Querträgern 5 verlaufen. Die Batteriezellen 2 können an den Querträgern 5 über mechanische Fügeelemente 11, wie Schrauben, befestigt, also zum Beispiel verschraubt sein.

Die Trägerplatte 4 bildet den die Wanne 1 an deren Unterseite bedeckenden Boden der Hochvoltbatterie.

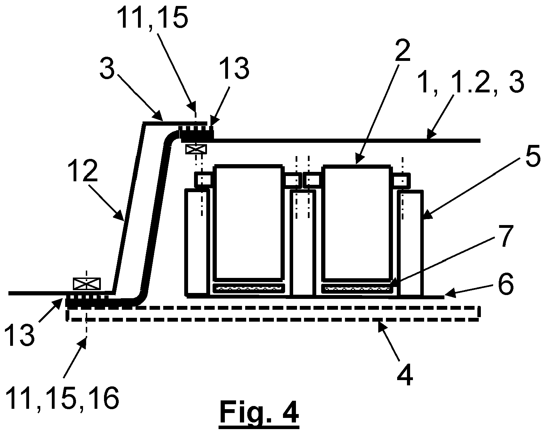

In der Ausführungsform der Fig. 4 sind die Befestigungspunkte 16 der Trägerplatte 4 an der gleichen Y Position wie die Befestigungspunkte 15 der Wanne 1. Die Trägerplatte 4 hat an den Schraubpositionen der Wanne 1 Ausnehmungen, damit sie gefügt werden kann. Der Vorteil dieser Ausführung liegt in dem besseren Kraftflußverlauf bei einem Seitenaufprall, und in einem nochmals vergrößerten Innenraum des Batteriegehäuses. In der Ausführung der Fig. 3 liegen die Befestigungspunkte 16 der Trägerplatte in Y Richtung näher an den Batteriezellen 2 als die Befestigungspunkte 15 der Wanne bzw. zwischen den Befestigungspunkten 15 der Wanne, also innen.

Im Gegensatz zu herkömmlichen Bauweisen wird erfindungsgemäß somit ein Batteriegehäuse wie eine verkehrte Wanne 1 in eine Fahrzeugkarosserie strukturintegriert eingebaut und schließt gleichzeitig eine Bodengruppe von unten ab. Dabei wird zum Fügen der Wanne 1 ein Montageklebstoffsystem mit Klebstoff 13 verwendet, in Kombination mit mechanischen Fügeelementen 11, wie Schrauben, Nieten etc. Die mechanischen Fügepunkte 11 ermöglichen eine kontinuierliche Fertigung der Fahrzeuge, ohne dass das Fahrzeug zum Aushärten des Klebstoffes 13 ausgeschleust werden muss.

Die Batteriemodule 2 sind dabei auf einer Trägerplatte 4 mit integriertem Zellenträger 6 stehend angeordnet und werden von unten eingebaut. Die Trägerplatte 4 ist gleichzeitig als Unterfahrschutz ausgeführt und ist wieder demontierbar.

Die Vormontage des Batteriegehäuses erfolgt im ausgebauten Zustand. Zuerst werden die Kühlplatten 7 in den Zellenträger 6 eingelegt, anschließend werden die Zellen 2 von oben in den Zellenträger eingesetzt und elektrisch miteinander verbunden. Zum Schluss wird die Trägerplatte 4 und die Wanne 1 miteinander verschraubt. Der Zellenträger 6 kann als einteiliges Gußteil zusammen mit der Trägerplatte 4 ausgeführt werden, oder auch als mehrteilige Schweißbaugruppe oder auch als Materialkombination, zum Beispiel die Trägerplatte 4 aus GFK und der Zellenträger 6 aus Aluminium.

Nach dem Verschrauben der Trägerplatte 4 mit der Wanne 1 erfolgt die Kontaktierung der Zellen 2 zu Steckerverbindungen an der Stirnseite des Gehäuses durch eine Ausnehmung. Danach wird eine Schließplatte, die auch die Steckverbindungen beinhaltet, gasdicht an das Gehäuse verschraubt.

Ein wesentlicher Vorteil dieser Anordnung ist der Bauraumzugewinn in Y Richtung um den Querschnitt, den üblicherweise ein Batterierahmen benötigt, sowie die Integration mehrerer Bauteile und die damit verbundene Einsparung an Einzelteilen und an der Fügetechnik.

Die Z-Maßkette wird ebenfalls kleiner aufgrund des fehlenden Luftspaltes zwischen Bodenplatte und Batteriegehäuse.

Durch den Entfall des Batterierahmens werden weiters Kosten und Gewicht eingespart.

Die Wartung oder Reparatur der Batteriezellen 2 kann im ausgebauten Zustand der Trägerplatte 4 von oben durchgeführt werden.

### Bezugszeichenliste

- 1: Wanne
- 1.1: Wanne Seitenwand
- 1.2: Wanne Deckel
- 1.3: erstes Blech
- 1.4: zweites Blech
- 2: Batteriezellen
- 3: Bodenblech
- 4: Trägerplatte
- 5: Querträger
- 6: Zellenträger
- 7: Kühlplatte
- 8: Flanschbereich
- 9: Schweller
- 9.1: Schweller außen
- 9.2: Schweller innen oben
- 9.3: Schweller mittig
- 11: Verschraubung
- 12: Tragstruktur
- 13: Klebstoff
- 15: Befestigungspunkte Wanne
- 16: Befestigungspunkte Trägerplatte

## Patentansprüche

1. Kraftfahrzeug mit einer Hochvoltbatterie, wobei die Hochvoltbatterie ein Batteriegehäuse umfasst, wobei das Batteriegehäuse zumindest Seitenwände (1.1) und einen die Seitenwände (1.1) oben bedeckenden Deckel (1.2) umfasst, wobei eine Vielzahl von Batteriezellen (2) im Batteriegehäuse angeordnet sind,
**dadurch gekennzeichnet, dass** die Seitenwände (1.1) und der Deckel (1.2) durch eine unten offene Wanne (1) ausgebildet sind, wobei eine Trägerplatte (4) den, die Wanne (1) an deren Unterseite bedeckenden Boden der Hochvoltbatterie bildet, wobei die Batteriezellen (2) auf der Trägerplatte (4) montiert sind, wobei die Wanne (1) aus zumindest zwei Blechen (1.3, 1.4) verschiedener Materialdicke und/oder Materialgüte gefügt ist.

2. Kraftfahrzeug nach Anspruch 1,
**dadurch gekennzeichnet, dass** ein erstes Blech (1.3) mit einer ersten Materialdicke und/oder Materialgüte im Wesentlichen die Seitenwände (1.1) ausbildet und ein zweites Blech (1.4) mit einer zweiten Materialdicke und/oder Materialgüte im Wesentlichen den Deckel (1.2) ausbildet.

3. Kraftfahrzeug nach Anspruch 2,
**dadurch gekennzeichnet, dass** die Wanne (1) eine zweiteilige Bauteilgruppe bildet, wobei das erste Blech (1.3) und das zweite Blech (1.4) in einem Flanschbereich (8) miteinander verschweißt sind und bevorzugt im Flanschbereich (8) abgedichtet sind.

4. Kraftfahrzeug nach Anspruch 2,
**dadurch gekennzeichnet, dass** die Wanne (1) einteilig durch Platinenschweißen hergestellt ist, wobei das erste Blech (1.3) und das zweite Blech (1.4) bereits als Platine miteinander verschweißt sind und anschließend umgeformt sind.

5. Kraftfahrzeug nach zumindest einem der vorhergehenden Ansprüche,
**dadurch gekennzeichnet, dass** die Batteriezellen (2) stehend auf der Trägerplatte (4) montiert sind, so dass die elektrischen Kontakte der Batteriezellen (2) nach oben gerichtet sind und die Zellenböden nach unten gerichtet sind.

6. Kraftfahrzeug nach zumindest einem der vorhergehenden Ansprüche,
**dadurch gekennzeichnet, dass** die Batteriezellen (2) auf einem Zellenträger (6) montiert sind, wobei der Zellenträger (6) einstückig von der Trägerplatte (4) ausgebildet ist oder mit der Trägerplatte (4) gefügt ist.

7. Kraftfahrzeug nach Anspruch 6,
**dadurch gekennzeichnet, dass** zumindest eine, bevorzugt mehrere flächige Kühlplatten (7) auf dem Zellenträger (6) angeordnet sind, unterhalb der Batteriezellen (2).

8. Kraftfahrzeug nach zumindest einem der vorhergehenden Ansprüche,
**dadurch gekennzeichnet, dass** die Trägerplatte (4) ein Unterfahrschutzblech (4) des Kraftfahrzeugs ausbildet.

9. Kraftfahrzeug nach zumindest einem der vorhergehenden Ansprüche,
**dadurch gekennzeichnet, dass** der Deckel (1.2) der Wanne (1) ein Bodenblech (3) des Kraftfahrzeugs bildet und/oder von unten an einem Bodenblech (3) befestigt ist, insbesondere verschraubt und/oder geklebt.

10. Kraftfahrzeug nach zumindest einem der vorhergehenden Ansprüche,
**dadurch gekennzeichnet, dass** der Deckel (1.2) der Wanne (1) Befestigungspunkte (14) für Sitzquerträger aufweist und/oder dass Sitzquerträger an der Wanne befestigt sind, insbesondere mit dem Deckel (1.2) der Wanne (1) verklebt und/oder verschraubt.

11. Kraftfahrzeug nach zumindest einem der vorhergehenden Ansprüche,
**dadurch gekennzeichnet, dass** die Wanne (1) an einer übrigen Tragstruktur des Kraftfahrzeugs, bevorzugt an seitlichen Schwellern (9) des Kraftfahrzeugs, von unten montiert ist, bevorzugt geklebt und geschraubt.

12. Kraftfahrzeug nach zumindest einem der vorhergehenden Ansprüche,
**dadurch gekennzeichnet, dass** die Wanne (1), insbesondere Seitenwände (1.1) der Wanne (1), einen Teil der Tragstruktur des Kraftfahrzeugs, bevorzugt der seitlichen Schweller (9) des Kraftfahrzeugs, ausbilden.

13. Kraftfahrzeug nach zumindest einem der vorhergehenden Ansprüche,
**dadurch gekennzeichnet, dass** eine Vielzahl von Querträgern (5) der Tragstruktur des Kraftfahrzeugs innerhalb der Wanne (1) der Hochvoltbatterie angeordnet sind.

14. Kraftfahrzeug nach Anspruch 6 und nach Anspruch 13,
**dadurch gekennzeichnet, dass** die Querträger (5) mit dem Zellenträger (6) verschweißt oder einstückig sind.

15. Kraftfahrzeug nach Anspruch 13 oder 14,
**dadurch gekennzeichnet, dass** die Batteriezellen (2) jeweils in den Zwischenräumen zwischen den Querträgern (5) stehend an den Querträgern (5) montiert sind, so dass mehrere parallele Reihen von Batteriezellen (2) zwischen den Querträgern (5) verlaufen.

16. Verfahren zur Herstellung eines Kraftfahrzeugs nach zumindest einem der Ansprüche 1 bis 15, wobei ein erstes Blech (1.3) mit einer ersten Materialdicke im Wesentlichen die Seitenwände (1.1) ausbildet und ein zweites Blech (1.4) mit einer zweiten Materialdicke im Wesentlichen den Deckel (1.2) ausbildet,
**dadurch gekennzeichnet, dass** das erste Blech (1.3) und das zweite Blech (1.4) geformt werden und danach in einem Flanschbereich (8) miteinander verschweißt werden um die Wanne (1) zu bilden oder dass das erste Blech (1.3) und das zweite Blech (1.4) bereits als Platine miteinander verschweißt werden und anschließend umgeformt werden um die Wanne (1) zu bilden.

17. Verfahren zur Herstellung eines Kraftfahrzeugs nach Anspruch 16, **dadurch gekennzeichnet, dass** in einem Vormontageprozess die Batteriezellen (2) auf die Trägerplatte (4) aufgesetzt werden, insbesondere in den Zellenträger (6) eingesetzt werden, dann die Trägerplatte (4) mit der Wanne (1) gefügt wird, zur Herstellung der Hochvoltbatterie und danach die vormontierte Hochvoltbatterie von unten in einer übrigen Tragstruktur des Kraftfahrzeugs montiert wird, bevorzugt an seitlichen Schwellern (9) des Kraftfahrzeugs befestigt wird.
